**Europäisches Patentamt**

**European Patent Office**

**Office européen des brevets**

(19)

(11) Veröffentlichungsnummer: **0 147 716**
**A2**

# (12) EUROPÄISCHE PATENTANMELDUNG

(21) Anmeldenummer: **84115130.1**

(22) Anmeldetag: **11.12.84**

(51) Int. Cl.⁴: **H 04 L 9/00**

(30) Priorität: **24.12.83 DE 3346907**

(43) Veröffentlichungstag der Anmeldung:
**10.07.85  Patentblatt  85/28**

(84) Benannte Vertragsstaaten:
**AT BE CH DE FR GB LI NL**

(71) Anmelder: **ANT Nachrichtentechnik GmbH**
**Gerberstrasse 33**
**D-7150 Backnang(DE)**

(72) Erfinder: **Ostermann, Bernd, Dipl.-Ing.**
**Sulzbacher Strasse 51**
**D-7150 Backnang(DE)**

(72) Erfinder: **Glitz, Ekkehard, ing. grad.**
**Stresemannstrasse 26/4**
**D-7150 Backnang(DE)**

(74) Vertreter: **Schickle, Gerhard, Dipl.-Ing.**
**ANT Nachrichtentechnik GmbH Patent- und**
**Lizenzabteilung Gerberstrasse 33**
**D-7150 Backnang(DE)**

(54) Verfahren und Anordnung zur verschlüsselbaren Übertragung einer Nachrichten-Binärzeichenfolge mit Authentizitätsprüfung.

(57) Die Erfindung betrifft ein Verfahren zur verschlüsselbaren Übertragung einer Nachrichten-Binärzeichenfolge mit Authentizitätsprüfung, wobei beim Sender und beim Empfänger eine Prüfauthentizitätskennung durch nichtlineare Verknüpfung der Summe der Binärzeichenfolge mit einem geheimen, nur Sender und Empfänger bekannten Authentizitätskennzeichen erzeugt wird, wobei nach Übertragung der Folge die beim Sender erzeugte Authentizitätskennung zum Empfänger übertragen und dort mit der beim Empfänger erzeugten verglichen wird und bei Übereinstimmung die übertragene Nachrichten-Binärzeichenfolge als authentisch erklärt wird, und ist dadurch gekennzeichnet, daß das geheime Authentizitätskennzeichen durch die Voreinstellung des Schlüsselprogrammes gebildet wird, daß die nichtlineare Verknüpfung der Summe der Nachrichten-Binärzeichenfolge mit dem Authentizitätskennzeichen durch das Schlüsselprogramm als Verschlüsselungsvorgang erfolgt und daß als Prüfauthentizitätskennung die so verschlüsselte Summe der Binärzeichenfolge zum Empfänger übertragen, dort entschlüsselt und mit der aus der empfangenen Nachrichtenbinärzeichenfolge gebildeten Summe verglichen wird.

./...

Croydon Printing Company Ltd.

EP 0 147 716 A2

FIG. 2

Verfahren und Anordnung zur verschlüsselbaren Übertragung einer Nachrichten-Binärzeichenfolge mit Authentizitätsprüfung

Die Erfindung betrifft ein Verfahren zur verschlüsselbaren Übertragung einer Nachrichten-Binärzeichenfolge mit Authentizitätsprüfung gemäß Oberbegriff des Anspruchs 1.
Nachrichten sind durch Verschlüsselung vor unbefugtem Zugriff, beispielsweise vor Abhören oder Mitlesen und Auswertung schützbar. Trotzdem gibt es noch Lücken, aufgrund derer Nachrichten durch Manipulation fälschbar sind, ohne daß der Empfänger dies bemerkt. Als Beispiele werden das Ändern, Hinzufügen oder Wegnehmen von Ziffern im Überweisungs- und Zahlungsverkehr genannt.
Um diese Möglichkeiten des Abhörens und der Fälschung zu unterbinden, werden wichtige Nachrichten bei der elektronischen Nachrichtenübermittlung verschlüsselt und authentisiert. Absender und Empfänger vereinbaren zu diesem Zweck ein Authentizitätskennzeichen bzw. -Kennwort und bilden aus dem Nachrichtentext und dem Authentizitätskennwort ein sogenanntes Authentizitätsprüfwort bzw. eine Authentizitätskennung. Der Absender einer Nachricht sendet das errechnete Prüfwort mit, so daß der Nachrichtenempfänger einen Vergleich zwischen dem selbst errechneten und dem empfangenen Prüfwort durchführen kann. Nur bei Übereinstimmung ist die empfangene Nachricht authentisch.
Zur Authentizitätsprüfung der oben genannten Art, sind sowohl beim Sender als auch beim Empfänger ein Authentikator erforderlich, der Speichermittel für die Authentizitätskennzeichen, eine Synchronisationseinheit, einen Summierer zur Quersummenbildung des zu übertragenden Textes und Rechenmittel zur nichtlinearen Verknüpfung der Quersumme mit dem Authentizitätskennzeichen enthält. Ferner sind Schaltmittel erforderlich, die bei Textendeerkennung zur Anwendung kommen, um die Authentizitätskennung zu übertragen bzw. empfangsseitig einem Vergleicher zuzuführen, der die übertragene Authentizitätskennung mit der empfangsseitig errechneten vergleicht.

Aufgabe der vorliegenden Erfindung war es, ein Verfahren
zur verschlüsselbaren Übertragung einer Nachrichten-Binärzeichenfolge der eingangs genannten Art anzugeben, das es
ermöglicht, den hohen Schaltungsaufwand für die Authentikatoren erheblich herabzusetzen, ohne daß der Grad für die
Authentität der übermittelten Nachrichten in irgendeiner
Weise beeinträchtigt wird.

Die Lösung erfolgt mit den im Patentanspruch 1 angegebenen
Verfahrensschritten.

Die Unteransprüche geben Schaltungsanordnungen zur Durchführung dieses Verfahrens an, wobei die Unteransprüche 3
und 4 optimale Ausgestaltungen bilden.

Es folgt nun die Beschreibung der Erfindung anhand der
Figuren.

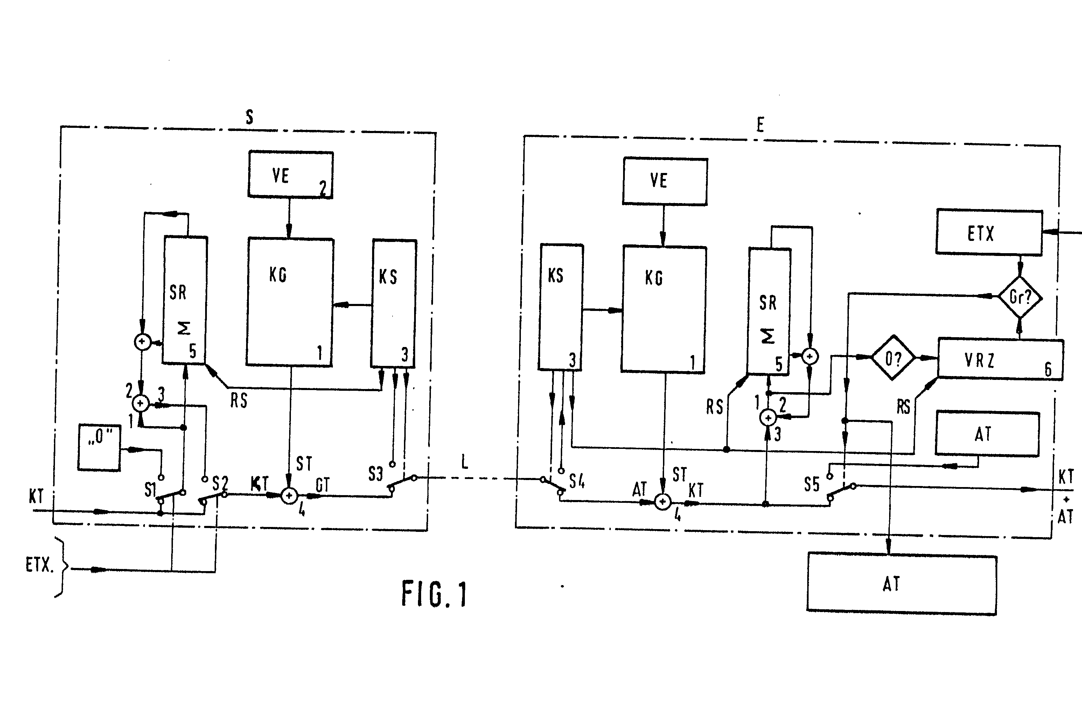

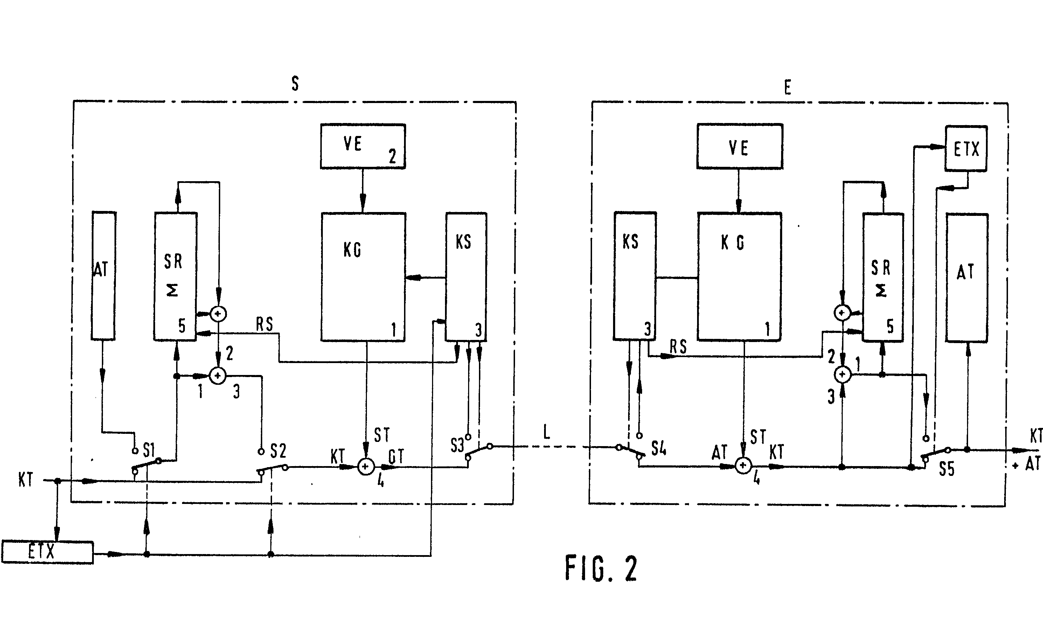

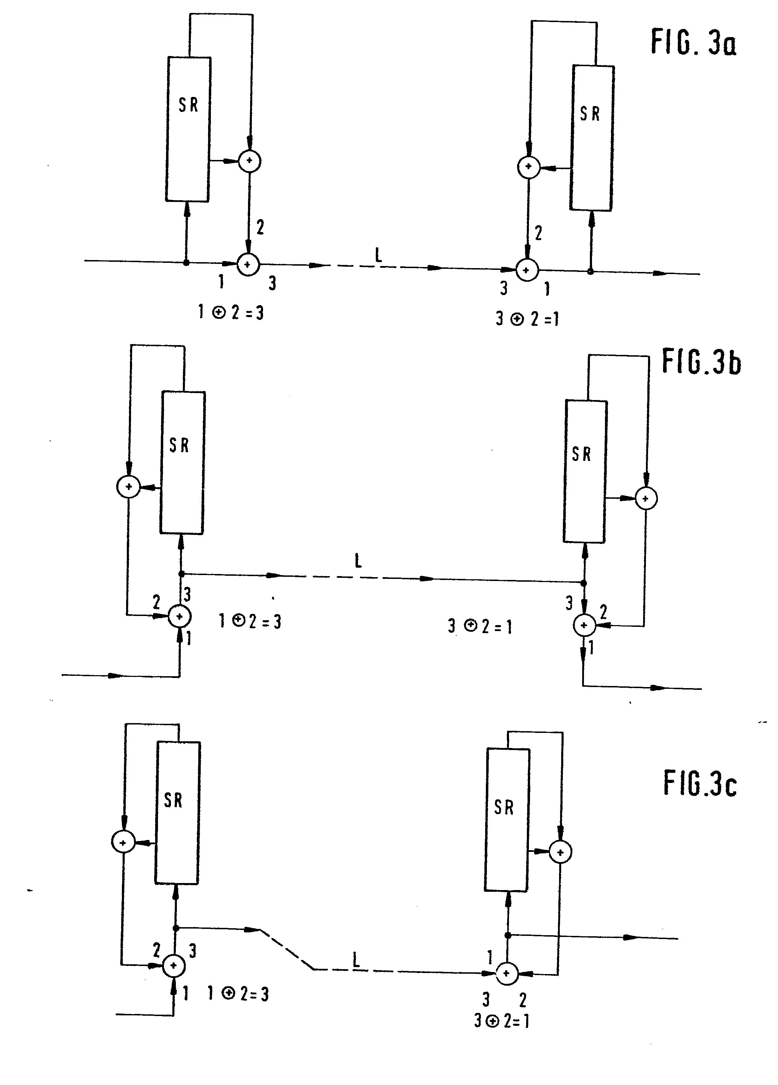

Die Figuren 1 und 2 stellen Ausführungsbeispiele für
eine Schaltungsanordnung zur Durchführung des erfindungsgemäßen Verfahrens dar. Die Figuren 3a, b, c zeigen
Schaltungseinzelheiten auf Sender- und Empfängerseite im
Ausschnitt.

In beiden Figuren sind linksseitig die sendeseitigen und
rechtsseitig die empfängerseitigen Einrichtungen zur Verschlüsselung bzw. Entschlüsselung und zur Authentizitätsprüfung gezeichnet. Sender und Empfänger sind über einen
Kanal oder über eine Leitung L miteinander verbunden.

Die Ver- bzw. Entschlüsselungseinrichtungen bestehen jeweils aus einem Kryptogenerator KG, aus einer Voreinstellung VE, die sich beispielsweise aus dem Grundschlüssel und aus einem variablen Schlüssel ergibt, und einer
Kryptosynchronisationseinheit KS. Zur Authentizitätsprüfung ist sowohl beim Sender als auch beim Empfänger ein
rückgekoppeltes Schieberegister SR zur Quersummenbildung
des Klartextes KT erforderlich.

Dieses Schieberegister SR, das beispielsweise 32 Bit lang
ist, ist über zwei Modulo-Zwei-Glieder auf seinen Eingang

rückgekoppelt. Die Art der Rückkopplungsschaltung kann dabei nach einer der drei in Figur 3 dargestellten Möglichkeiten erfolgen. Zu Beginn der Übertragung wird das Schieberegister mittels eines Resetimpulses RS von der sende- bzw. empfangsseitigen Kryptosynchronisationseinrichtung KS gelöscht. Die Übertragung beginnt, sobald sich die beiden Kryptosynchronisationseinheiten über die Verbindungsleitung L synchronisiert haben, wodurch die beiden Schalter S3 und S4 umgelegt werden und somit die Textverbindung über die Ruhestellung des Schalters S2, über das Verschlüsselungsglied 4, über die Ruhestellung des Schalters S3, die Leitung L und auf der Empfangsseite über die Ruhestellung des Schalters S4, das Entschlüsselungsglied 4 und die Ruhestellung des Schalters S5 ermöglicht. Über die Ruhestellung des Schalters S1 gelangt der Klartext auch in das quersummenbildende Schieberegister SR. Eine Einrichtung zur Erkennung von Blockende, Spruchende, oder Textende ETX untersucht den Klartext auf die entsprechende Endekennung. Bei Erkennung derselben werden die Schalter S1 und S2 umgelegt, wodurch der Eingang des Schieberegisters auf Null gelegt wird und der Ausgang desselben mit dem Klartexteingang KT des Verschlüsselungsgliedes 4 verbunden wird. Nunmehr wird der Inhalt des Schieberegisters verschlüsselt übertragen. Empfangsseitig wird das Authentizitätsprüfwort wie der zuvor empfangene Geheimtext entschlüsselt und wie der zuvor entschlüsselte Text auf den Eingang der Summierschaltung des Quersummen bildenden rückgekoppelten Schieberegisters SR gegeben. Die Authentizität kann dann erkannt werden, wenn die Modulo-Zwei-Summe aus dem empfangenenen Prüfwort und dem im empfangsseitigen Schieberegister gespeicherten Prüfwort gleich Null wird. Zur Überwachung wird ein Vorwärts-Rückwärtszähler VRZ verwendet, dessen Eingang mit dem Ausgang der vorher erwähnten Summierschaltung verbunden ist und der bei jeder binären Null vorwärts und bei jeder binären Eins rückwärts zählt. Eine Einrichtung zur Grenzwertüberwachung Gr liefert ein Aussagesignal über die Echtheit des übertragenen Textes.

Dieses Signal wird dazu benutzt, einen Schalter S5 umzulegen und eine optische oder akustische Anzeige mit der Bedeutung "Authentischer Text" auszugeben oder einen Speicher mit entsprechendem Text auf die Klartextausgabe aufzuschalten und auszulesen.

Die Anordnung nach Figur 2 unterscheidet sich auf der Senderseite gegenüber der Anordnung nach Figur 1 lediglich darin, daß bei Erkennung von ETX ein Textgeber AT beispielsweise mit dem Text "Authentischer Text", auf den direkten Eingang des Schieberegisters gelegt und ausgelesen wird, wobei durch ein Modulo-Zwei-Glied dieser Text mit dem Schieberegisterausgang verknüpft und anschließend verschlüsselt übertragen wird. Auf der Empfangsseite wird der empfangene Geheimtext GT entschlüsselt und der Klartext KT in das Quersummen bildende Schieberegister SR eingeschrieben. Bei Textendeerkennung, welche durch die Einrichtung ETX erfolgt, wird der Schalter S5 umgelegt, so daß der Ausgang des eingangsseitigen Modulo-Zwei-Gliedes des Schieberegisters SR mit dem Klartextausgang verbunden wird. Das nunmehr einlaufende und entschlüsselte Kennwort wird über diese Modulo-Zwei-Schaltung mit dem Inhalt des Schieberegisters SR verknüpft, wodurch bei richtiger Übertragung der im sendeseitigen Textgeber gespeicherte Text "Authentischer Text" an die Klartextausgabe geliefert oder in einer optischen oder akustischen Signalanzeige angezeigt wird.

Durch das erfindungsgemäße Verfahren wird es ermöglicht, Einrichtungen zur Verschlüsselung von zu übertragenden Texten zur Authentizitätsprüfung in vorteilhafter Weise zu benutzen, wobei der zusätzliche Aufwand sehr gering ist und gegenüber den Authentikatoren üblicher Art eine sehr große Aufwandsreduzierung darstellt. Durch die Verwendung der Kryptoeinrichtung ist auch der Grad der Authentität in keiner Weise vermindert.

Durch die Textendeerkennungseinrichtung ETX ist es weiterhin möglich, die Authentizitätsprüfung automatisch durchzuführen und das Ergebnis anzuzeigen. Die Schaltungsanordnung nach Figur 2 stellt eine optimale Ausführung
dar, wobei auf der Senderseite neben dem obligatorischen
Quersummenregister im wesentlichen nur ein Textgeber und
auf der Empfangsseite im wesentlichen nur das obligatorische
Quersummenregister vorzusehen ist. Selbstverständlich kann
anstelle der automatischen Textendeerkennung auch eine manuelle Arbeitsweise treten, wobei die beiden Krypto-Synchronisationseinheiten zur entsprechenden Synchronisation von
Sender und Empfänger heranzuziehen sind.

0147716

- 1 -

ANT Nachrichtentechnik GmbH          E7/Ruf/sch
Gerberstr. 33                        BK 81/116
D-7150 Backnang

Patentansprüche

1.  Verfahren zur mit Hilfe eines voreinstellbaren Schlüs-
    selprogrammes verschlüsselbaren Übertragung einer Nach-
    richten-Binärzeichenfolge mit Authentizitätsprüfung, wo-
    bei beim Sender und beim Empfänger eine Prüfauthentizitätskennung durch nichtlineare Verknüpfung der Summe
    der Binärzeichenfolge mit einem geheimen, nur dem Sender und dem Empfänger bekannten Authentizitätskennzeichen erzeugt wird, wobei nach Übertragung der Folge
    die beim Sender erzeugte Authentizitätskennung zum
    Empfänger übertragen und dort mit der beim Empfänger
    erzeugten verglichen wird und bei Übereinstimmung die
    übertragene Nachrichten-Binärzeichenfolge als authentisch erklärt bzw. erkannt wird, dadurch gekennzeichnet,
    daß im Sender (S) das geheime Authentizitätskennzeichen
    durch die Voreinstellung (VE) des Schlüsselprogrammes,
    insbesondere durch den Grundschlüssel und den variablen
    Schlüssel, gebildet wird,
    daß die nichtlineare Verknüpfung der Summe der Nachrichten-Binärzeichenfolge (KT) mit dem Authentizitätskennzeichen durch das Schlüsselprogramm als Verschlüsselungsvorgang erfolgt und

daß als Prüfauthentizitätskennung die so verschlüsselte
Summe der Binärzeichenfolge zum Empfänger (E) übertragen,
dort entschlüsselt und mit der aus der empfangenen
Nachrichten-Binärzeichenfolge gebildeten Summe verglichen wird.

2. Schaltungsanordnung zur Durchführung des Verfahrens
   nach Anspruch 1, mit einer sende- und empfangsseitigen
   Ver- bzw. Entschlüssungs- und -synchronisationseinrichtung, dadurch gekennzeichnet, daß auf Sender- und Empfangsseite zur Summenbildung jeweils ein in gleicher
   Weise rückgekoppeltes Schieberegister (SR) sowie eine
   Ende-Erkennungseinrichtung (ETX) zum Erkennen des Endes
   der Nachrichten-Binärzeichenfolge vorgesehen sind,
   daß der Eingang des sendeseitigen Schieberegisters (SR)
   über einen ersten Schalter (S1) mit der Quelle der Binärzeichenfolge (KT) und sein Ausgang über einen zweiten Schalter (S2) mit dem Klartexteingang (KT) der Verschlüsselungseinrichtung verbindbar ist,
   daß bei Übertragung der Binärzeichenfolge (KT) der ersten Schalter (S1) geschlossen und der zweite Schalter
   (S2) geöffnet ist,
   daß auf der Empfangsseite der Eingang des Schieberegisters (SR) mit dem Klartextausgang (KT) der Entschlüsselungseinrichtung und sein Ausgang mit dem Eingang
   eines Vergleichers (0?) verbunden ist,
   daß ein Vor-Rückwärtszähler (VRZ) vorgesehen ist, dessen Eingang mit dem Vergleicherausgang verbunden ist
   und
   daß bei Endeerkennung durch die sendeseitige Ende-Erkennungseinrichtung (ETX) der erste Schalter (S1) geöffnet und der zweite Schalter (S2) geschlossen werden
   und durch die empfangsseitige Ende-Erkennungseinrichtung (ETX) der Inhalt des Vor-Rückwärtszählers (VRZ)
   auslesbar ist und
   daß bei Unterschreiten des Zählerinhalts unter einen
   vorgebbaren Grenzwert (Gr?) Authentität der Nachrichten-Binärzeichenfolge (KT) erklärt wird.

3. Schaltungsanordnung nach Anspruch 2, dadurch gekennzeichnet, daß vor Übertragung der Nachrichten-Binärzeichenfolge (KT) durch die Synchronisiereinrichtung (KS) die Schieberegister (SR) und der Vor-Rückwärtszähler (VRZ) auf 0 gesetzt werden (RS) (Figur 1).

4. Schaltungsanordnung nach Anspruch 2 oder 3, dadurch gekennzeichnet, daß der erste und zweite Schalter (S1, S2) Umschalter sind und daß bei Endeerkennung durch den ersten Schalter (S1) der Eingang des sendeseitigen Schieberegisters (SR) an 0 gelegt wird und durch den zweiten Schalter (S2) die Quelle der Binärzeichenfolge (KT) von Klartexteingang (KT) der Verschlüsselungseinrichtung getrennt wird.

5. Schaltungsanordnung nach Anspruch 2, 3 oder 4, dadurch gekennzeichnet, daß empfangsseitig die Authentizitätserklärung durch eine optische oder akustische Signalausgabe (AT) angezeigt wird, die durch den Vor-Rückwärtszähler (VRZ) über die Grenzwertabfrage (Gr?) angesteuert wird.

6. Schaltungsanordnung nach einem der Ansprüche 2 bis 5, dadurch gekennzeichnet, daß empfangsseitig ein weiterer Schalter (S5) vorgesehen ist, durch den bei Authentizitätserklärung ein Textgeber (AT) an die Klartextsenke (KT) des Empfängers (E) angeschaltet wird.

7. Schaltungsanordnung zur Durchführung des Verfahrens nach Anspruch 1, mit einer sende- und empfangsseitigen Ver- bzw. Entschlüsselungs- und -synchronisationseinrichtung, dadurch gekennzeichnet, daß auf Sender- und Empfangsseite zur Summenbildung jeweils ein in gleicher Weise rückgekoppeltes Schieberegister (SR) sowie eine Ende-Erkennungseinrichtung (ETX) zum Erkennen des Endes der Nachrichten-Binärzeichenfolge vorgesehen sind,

daß der Eingang des sendeseitigen Schieberegisters (SR) über einen ersten Schalter (S1) mit der Quelle der Binärzeichenfolge (KT) und sein Ausgang über einen zweiten Schalter (S2) mit dem Klartexteingang (KT) der Verschlüsselungseinrichtung verbindbar ist, daß bei Übertragung der Binärzeichenfolge (KT) der erste Schalter (S1) geschlossen und der zweite Schalter (S2) geöffnet ist, daß auf der Empfangsseite der Eingang des Schieberegisters (SR) mit dem Klartextausgang (KT) der Entschlüsselungseinrichtung verbunden ist und sein Ausgang über einen weiteren Schalter (S5), der bei Übertragung der Binärzeichenfolge (KT) geöffnet ist, mit der Klartextsenke (KT) des Empfängers verbindbar ist, daß bei Endeerkennung durch die sendeseitige Ende-Erkennungseinrichtung (ETX) der erste Schalter (S1) geöffnet und der zweite Schalter (S2) geschlossen werden und über einen Umschaltekontakt des ersten Schalters (S1) ein Textgeber (AT) an den Eingang des Schieberegisters (SR) angeschlossen und durch die empfangsseitige Ende-Erkennungseinrichtung (ETX) der weitere Schalter (S5) geschlossen wird (Figur 2).

8. Schaltungsanordnung nach Anspruch 7, dadurch gekennzeichnet, daß vor Übertragung der Nachrichten-Binärzeichenfolge (KT) durch die Synchronisiereinrichtung (KS) die Schieberegister (SR) auf 0 gesetzt werden (RS).

9. Schaltungsanordnung nach Anspruch 7 oder 8, dadurch gekennzeichnet, daß der zweite Schalter (S2) ebenfalls ein Umschalter ist, durch den bei Endeerkennung die Quelle der Binärzeichenfolge (KT) vom Klartexteingang (KT) der Verschlüsselungseinrichtung getrennt wird.

10. Schaltungsanordnung nach Anspruch 7, 8 oder 9, dadurch
    gekennzeichnet, daß empfangsseitig die Authentizitätserklärung durch eine optische oder akustische Signalaus-
    gabe (AT) angezeigt wird.

0147716

FIG.1

0147716

FIG. 2

0147716

FIG. 3a

$1 \oplus 2 = 3$     $3 \oplus 2 = 1$

FIG.3b

$1 \oplus 2 = 3$     $3 \oplus 2 = 1$

FIG.3c

$1 \oplus 2 = 3$     $3 \oplus 2 = 1$